# EUROPEAN PATENT APPLICATION

(11) **EP 3 816 669 A1**
(43) Date of publication of application: **05.05.2021**
(21) Application number: 19206256.0
(22) Date of filing: 30.10.2019
(51) Int. Cl.: G01S 13/931, G01S 7/35, G01S 13/87, G01S 7/03, G01S 13/34, G08C 23/06

(54) **A COHERENT MULTI-ANTENNA RADAR TRANSCEIVER**

(71) Applicant: Veoneer Sweden AB, 447 83 Vårgårda (SE); CNIT - Consorzio Nazionale Interuniversitario par le Telecomunicazioni, 43124 Parma (IT)
(72) Inventor: GHELFI, Paolo, 43124 Parma (IT); MALACARNE, Antonio, 43124 Parma (IT); MARESCA, Salvatore, 43124 Parma (IT); BOGONI, Antonella, 43124 Parma (IT); SCOTTI, Filippo, 43124 Parma (IT); BRUNNEGÅRD, Oliver, 447 83 Vårgårda (SE); ERIKSSON, Olof, 447 83 Vårgårda (SE)
(74) Representative: Westpatent AB

(57) **Abstract**

A radar transceiver (101) for transmitting and receiving radar signals in a radar frequency band, the transceiver comprising a control unit (130) and three or more antenna ports (110), where one or more of the antenna ports is a transmit port and one or more of the antenna ports is a receive port, where each antenna port is connected to the control unit (130) via an optical link arranged to transfer a radar signal coherently with respect to at least one other of the optical links, thereby enabling coherent receive port processing by the control unit (130).

## Description

### DESCRIPTION OF THE DISCLOSURE

The present disclosure relates to radar transceivers and multiantenna radar systems in particular. The radar systems discussed herein are suitable as vehicle radar systems.

A radar transceiver is a device arranged for transmission and reception of radar signals in a radar frequency band. Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based.

A challenge in many radar applications is to obtain sufficient detection range and spatial resolution. Important objects may not be detected if they are located beyond the radar range. If spatial resolution is not sufficient, then multiple objects may appear as a single object, since the resolution is not sufficient for distinguishing the objects, which complicates vehicle environment monitoring.

Spatial resolution can be further divided into longitudinal resolution, i.e., range or distance resolution, and lateral resolution, i.e., resolution in angle. Range resolution is heavily dependent on the bandwidth of the transmitted radar signal. Angular resolution can be improved by use of directive antennas and antenna arrays.

Another issue related to radar systems in vehicular applications is the overall system cost. It is desired to reduce cost of the overall vehicle, meaning that the cost of the radar system should be kept at a minimum.

DE 102017206524 B3 discloses a radar system where signals from radar antennas are transported to a central processing unit via optical links. Cost is conserved by way of the central processing.

It is an object of the present disclosure to provide cost-efficient radar transceivers with improved resolution. This object is achieved by a radar transceiver for transmitting and receiving radar signals in a radar frequency band. The transceiver comprising a control unit and three or more antenna ports, where one or more of the antenna ports is a transmit port and one or more of the antenna ports is a receive port, where each antenna port is connected to the control unit via an optical link arranged to transfer a radar signal coherently with respect to at least one other of the optical links, thereby enabling coherent receive port processing by the control unit.

This way coherent radar processing is enabled in a cost-effective manner. The coherent processing enables, e.g., improved resolution. There is no need to distribute a high frequency reference signal over longer distances.

Further advantages are obtained by the dependent claims.

There are also disclosed herein control units, computer program products, methods and vehicles associated with the above-mentioned advantages.

### BRIEF DESCRIPTION OF THE DRAWINGS

The present disclosure will now be described more in detail with reference to the appended drawings, where:
Figure 1 shows a schematic top view of a vehicle;
Figure 2 shows an example radar operation;
Figure 3 schematically illustrates an example radar transceiver;
Figure 4 illustrates coherent radar signal processing;
Figures 5-7 show radar transceiver implementation examples;
Figure 8 shows an example control unit;
Figure 9 shows an example computer program product; and
Figure 10 illustrates example coherent radar signal combining.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

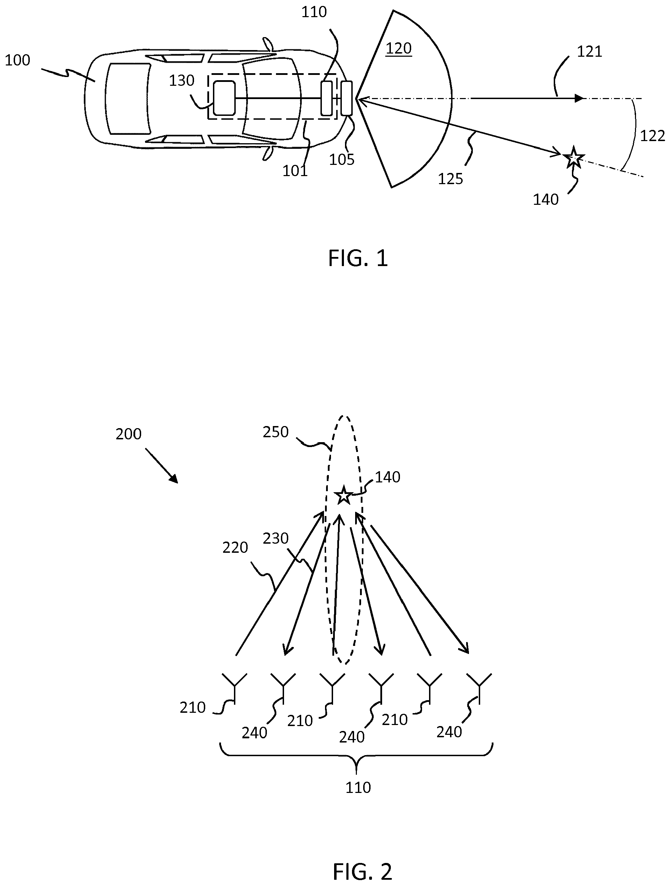

Figure 1 shows a vehicle 100 equipped with a vehicle radar transceiver 101. The transceiver 101 comprises a control unit 130 and three or more antenna ports 110 connected to respective antennas 105 arranged in an antenna array.

According to an example, the vehicle radar transceiver 101 comprises a transceiver arrangement that is arranged for generating and transmitting radar signals in the form of frequency modulated continuous wave (FMCW) signals, sometimes also referred to as radar chirp signals, and to receive reflected radar signals 125, where the transmitted signals have been reflected by an object 140.

The radar transceiver 101 is associated with a field of view 120. In case the radar transceiver 101 is a front radar, a boresight direction 121 of the radar often coincides with a center line of the field of view 120. In case the vehicle radar is instead configured as a side radar, then the boresight direction may point in some other angle compared to the forward direction of the vehicle 100.

The spatial resolution of a radar transceiver, i.e., longitudinal and lateral resolution, may be improved by using a plurality of transmit and/or receive antennas in an antenna array. More antennas in the antenna array often means that resolution in angle 122 is improved.

Figure 2 illustrates an antenna array 200 with three transmit antennas 210 and three receive antennas 240. The transmit antennas transmit radar signals 220 which are reflected by the object 140. Reflected radar signals 230 are then received by the receive antennas 240.

Antenna arrays can be used for beamforming which improves both range in that signal-to-noise ratio (SNR) in a given direction can be increased, and spatial lateral resolution in particular lateral resolution, i.e., angular resolution, in that the angle to a reflecting object can be determined more accurately compared to the case when no antenna array, or an antenna array with a smaller number of antennas is used. An antenna lobe 250 of the antenna array is schematically illustrated in Figure 2. Note that the lobe is directed towards the object 140, improving detection conditions for detecting the object 140.

The antenna array is as most efficient if coherent receive port processing is possible. This means that the relative phases of the different receive signals are possible to control such that, e.g., two receive signal can be added in phase, or combined with a pre-determined phase relationship.

Antenna arrays and beamforming is known in general and will not be discussed in more detail herein.

A problem with beamforming and coherent radar signal processing in general is that the different signal component phases often have random components which distort phase relationships between the signal components. An example is if two different receive port signals are downconverted by different at least partly independent oscillators. The relative phase of the two signals is then likely to vary over time due to the independent phase noise process of the two oscillators.

This unknown and time varying phase relationships between signal components complicate receive port processing by, e.g., the control unit 130. Suppose for instance that the control unit 130 receives two radar signals from two receive ports and wishes to combine the two in phase in order to maximize signal strength. The control unit 130 then needs to track the time varying phase difference of the two resulting from the two different phase noise realizations, which it most likely cannot do perfectly, at least without complex resource demanding processing.

This problem becomes worse as higher and higher carrier frequencies are used. Today, automotive radar systems operate at carrier frequencies on the order of 77 GHz or more, and higher carrier frequencies are envisioned for future systems.

A possible solution to the coherent processing problem is to distribute a common electrical carrier signal to each receive port, where the common carrier signal can be used for downconverting baseband (BB) or intermediate frequency (IF) signals in frequency. However, due to losses and other effects, it is not easy to distribute high frequency signals over longer distances, such as between a central processor and antennas in a vehicle, in a cost-efficient manner.

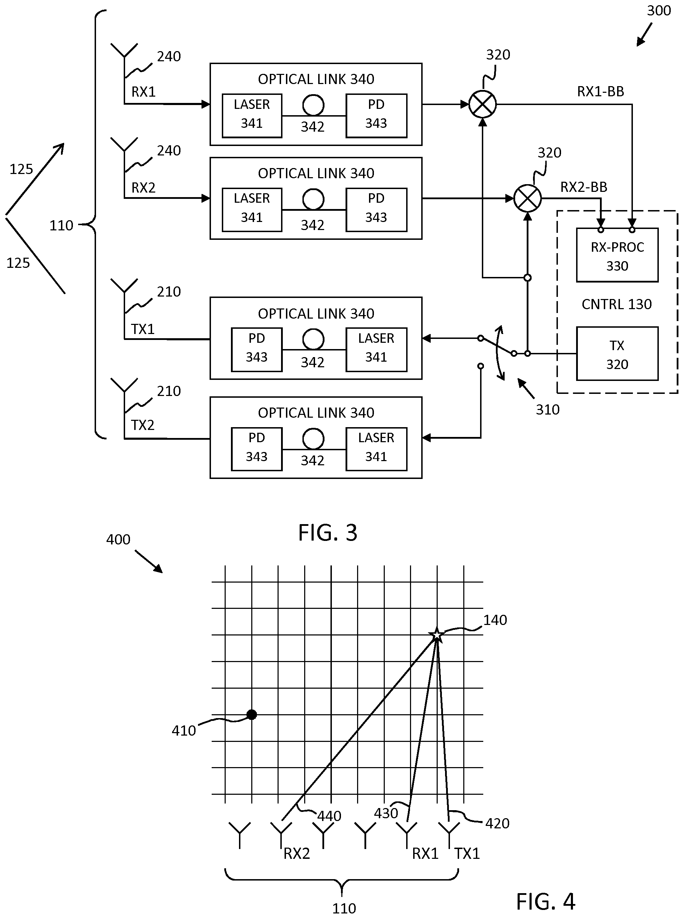

Figure 3 illustrates a radar transceiver 300 for transmitting and receiving radar signals 125 in a radar frequency band. The transceiver 300 comprises a control unit 130 and three or more antenna ports 110. In general, one or more of the antenna ports is a transmit port TX1, TX2 and one or more of the antenna ports is a receive port RX1, RX2, meaning that the radar transceiver uses an antenna array for transmission and/or for reception. Each antenna port is connected to a corresponding antenna unit 210, 240. Notably, a receive port and a transmit port can be connected to the same physical antenna unit, e.g., via circulators or the like, or they can be connected to physically separate antenna devices. An antenna device may comprise one or more radiating elements, i.e., each transmit port, and each receive port, may be connected to an antenna sub-array comprising a plurality of radiating elements.

In Figure 3, a configuration with two receive ports RX1, RX2 and two transmit ports TX1, TX2 is shown, where each antenna port is connected to the control unit 130 via a corresponding optical link 340 arranged to transfer a radar signal coherently with respect to at least one other of the optical links 340.

The signals received on the one or more receive ports RX1, RX2 are arranged to be downconverted in frequency 320 by a common carrier signal after traversing respective optical links 340, thereby enabling coherent receive port processing by the control unit 130. This type of architecture is particularly suitable for FMCW operation with time multiplexed transmit signals. A switch 310, which may be an electrical switch or an optical switch, is used to switch transmit signal between the different transmit ports TX1, TX2. Thereby providing a time multiplexed transmit signal which is then orthogonal between the different transmit ports. The receive signals on the different receive ports RX1, RX2 are then downconverted by the transmitted signal. This results in coherent baseband or IF radar signals RX1-BB and RX2-BB. In FMCW operation, the IF signal after down-conversion will comprise frequency components proportional to the round-trip distance to a reflecting object 140.

Figure 4 illustrates an example of coherent radar signal processing. A grid 400 is defined to cover some area in the field of view of the radar. A transmit signal 420 is generated and transmitted via a first transmit port TX1. This transmitted signal is reflected 430, 440 by an object 140 and received at the receive ports RX1, RX2. Now, for each point 410 in the grid, or at least for a sub-set of points, the received signals can be coherently combined, meaning that the two received signals are summed in phase in order to maximize received signal strength for that given grid point. The radar signal 430 received at the first receive port RX1 has some phase φ1. The radar signal 440 received at the second receive port RX2 has some other phase φ2 which differs from the phase of the first receive signal 430 due to the difference in traveled distance. This phase difference φ2-φ1 can be determined based on the distance from the transmit antenna 420 to the receive antenna of the first receive port RX1, on the distance from the transmit antenna 420 to the receive antenna of the second receive port RX2, and on the wavelength of a center frequency of the radar frequency band. Thus, for each grid point 410, the two receive signals may be phase shifted such that they combine in phase for that particular location in the grid.

In other words, according to some aspects, the coherent receive port processing by the control unit 130 comprises coherently combining received signals based on antenna pair distances to a target location.

With reference again to Figure 3, the phases of the received frequency components may be adjusted for coherent combination as discussed above in connection to Figure 4. Thus, for a given grid point 410, the differences in antenna pair distances is determined and used to phase shift received signals to coherently combine the received signals. The received signals may, e.g., be phase shifted based on some selected reference signal. The process is then repeated for the other transmit port, i.e., the switch 310 is flipped resulting in transmission from the other transmit port TX2, and down-conversion based on the signal transmitted on transmit port TX2.

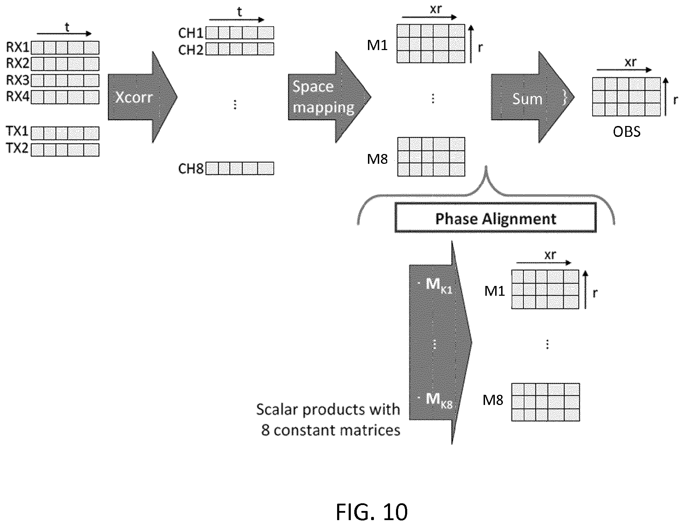

To provide an example of this type of coherent radar signal processing consider Figure 10 where two transmit antennas TX1, TX2 and four receive antennas RX1, RX2, RX3, RX4 are used for object detection on a grid. First, the four received signals are down-converted from the radar frequency band to baseband (BB). Then, the BB-equivalent signals are cross-correlated (Xcorr) with the two reference waveforms (i.e. employed at the two TXs), thus obtaining eight vectors, one for each TX/RX couple, CH1, CH2, ..., CH8. During this operation system delays of each TX/RX virtual channel may be compensated for possible unpredictable differences caused by small differences of cables and circuitry. These delays can be measured in advance for all the possible combinations of TXs and RXs, e.g., after "short-circuiting" them.

Based on knowledge of the relative position of each antenna in the antenna array 105, the eight complex cross-correlation vectors, which are functions of the travel time (i.e. the bistatic range), are mapped via geometric transformation (space mapping) into complex matrices M1, ..., M8 representing the bidimensional scene at the varying of range (i.e. ordinates) and cross-range (i.e. abscissas) in the grid.

At this point it is possible to perform two types of processing: non-coherent and coherent processing strategies. In the first approach, or non-coherent, the amplitudes of the eight complex channel matrices are summed (i.e. non coherent summation). In the second approach, i.e., coherent, the complex channel matrices are first multiplied by a further "phase-alignment" matrix M_{K1},...,M_{K8} which compensates the phase shifts due to the different signal travel delays in the space. Finally, the resulting phase-aligned matrices are summed together in real and imaginary parts (sum), giving a single matrix (OBS) representing the observed scenario.

With reference again to Figure 3, the optical links can be realized in a number of different ways. According to an example, an optical link 340 comprises a laser 341 arranged to generate an intensity modulated signal in dependence of an input radar signal. The intensity modulated signal is input to an optical fiber 342 arranged to transport the intensity modulated signal to an envelope detector 343. The envelope detector is arranged to convert the transported intensity modulated signal into an output radar signal. The envelope detector 343 may, e.g., be a photodetector (PD).

This way the radar signal, which may be represented, e.g., as a fluctuating voltage or current signal on an electrical conductor, or a fluctuating field in a waveguide, is transferred to a light signal or optical carrier having an intensity in dependence of the fluctuating voltage, current or field. The optical carrier is then converted back into voltage or current signal by the envelope detector 343. The phase of the transported signal is maintained, since the radar frequency band signal is transported, to the antenna, without frequency conversion or other modulation.

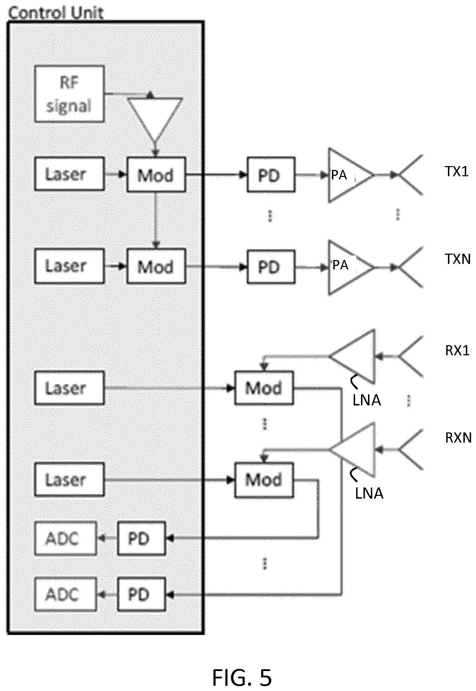

Figure 5 schematically illustrates a basic architecture for implementing optical fiber radar signal transmission with external modulators. In this configuration, each transmitting (TX) or receiving (RX) antenna requires one laser, one modulator (Mod), and one envelope detector or photodetector (PD). In the case of the receiving links, the lasers can be hosted by the control unit, while the modulators need to be placed in proximity of the receiving antennas.

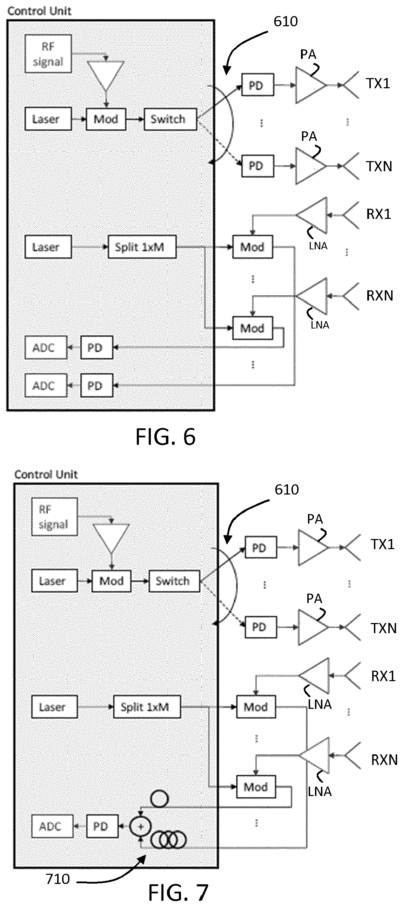

Figure 6 shows another basic architecture that reduces the number of required components and therefore likely is more cost-efficient. It is based on the idea of using a time-multiplexing approach at the transmitter, enabled by an optical switch 910.

This way, one optical link may serve a plurality of transmit ports TX1, ..., TXN. Moreover, at the receiver section a single laser is split to serve a plurality of receive ports, through dedicated modulators and envelope detectors.

The optical switch 610 can be realized with micro-electromechanical switch (MEMS) technology, with switching time in the ms range. Alternatively, solid-state-based optical switches (i.e., active switches that turn on or off a specific output port by means of semiconductor optical amplifiers) can be as fast as 50 ns.

Figure 7 shows an additional simplification that enables a cost-efficient time-multiplexing at the receiver, so that a single envelope detector can be used. This is based on the introduction of fiber spools 710 along the receive port optical links and after the modulators, so that the received signals arrive at the envelope detector one after the other. This approach potentially requires an additional modification in the waveform generated by the RF signal generator, to consider the longer acquisition time.

Notably, according to some aspects, an antenna connected to a transmit port TX1, TX2 may be arranged to be driven directly by the output of the envelope detector 343. I.e., the power amplifiers (PA) shown in Figures 6-7 are optional.

According to aspects, the laser 341 is a Vertical-Cavity Surface-Emitting Laser, VCSEL, or a distributed feedback laser, DFB.

The name of the VCSEL device refers to the fact that this laser is lithographically built vertically in a wafer, and it emits from the top surface of the wafer itself. Moreover, the contact pads are built on the wafer surface as well. This means that the lasers built in the wafer can be tested in parallel before the dicing. Moreover, VCSEL's are associated with low-cost manufacturability, low-cost testability, low-cost packageability, power efficiency as well as good spectral properties both at room and high temperatures (up to 85°C).

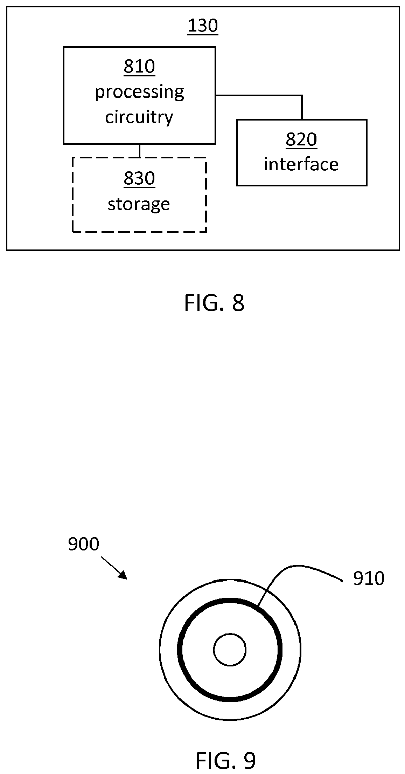

Figure 8 schematically illustrates, in terms of a number of functional units, the components of the control unit 130 according to an embodiment. Processing circuitry 810 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 830. The processing circuitry 810 may further be provided as at least one application specific integrated circuit (ASIC), or field programmable gate array (FPGA).

Particularly, the processing circuitry 810 is configured to cause the control unit 130 to perform a set of operations, or steps. These operations, or steps, were discussed above in connection to the various radar transceivers and methods. For example, the storage medium 830 may store the set of operations, and the processing circuitry 810 may be configured to retrieve the set of operations from the storage medium 830 to cause the control unit 130 to perform the set of operations. The set of operations may be provided as a set of executable instructions. Thus, the processing circuitry 810 is thereby arranged to execute methods and operations as herein disclosed.

The storage medium 830 may also comprise persistent storage, which, for example, can be any single one or combination of magnetic memory, optical memory, solid state memory or even remotely mounted memory.

The control unit 130 may further comprise a communications interface 820 for communications with at least one other unit. As such, the radar interface 820 may comprise one or more transmitters and receivers, comprising analogue and digital components and a suitable number of ports for wired or wireless communication.

The processing circuitry 810 is adapted to control the general operation of the control unit 130 e.g. by sending data and control signals to the external unit and the storage medium 830, by receiving data and reports from the external unit, and by retrieving data and instructions from the storage medium 830. Other components, as well as the related functionality, of the control unit 130 are omitted in order not to obscure the concepts presented herein.

Figure 9 shows a computer program product 900 comprising computer executable instructions 910 to execute any of the methods disclosed herein.

## Claims

1. A radar transceiver (101, 300) for transmitting and receiving radar signals (125) in a radar frequency band, the transceiver comprising a control unit (130) and three or more antenna ports (110), where one or more of the antenna ports is a transmit port (TX1, TX2) and one or more of the antenna ports is a receive port (RX1, RX2), where each antenna port is connected to the control unit (130) via an optical link (340) arranged to transfer a radar signal coherently with respect to at least one other of the optical links (340), thereby enabling coherent receive port processing (330) by the control unit (130) .

2. The radar transceiver (101, 300) according to claim 1, wherein the optical link (340) comprises a laser (341) arranged to generate an intensity modulated signal in dependence of an input radar signal, an optical fiber (342) arranged to transport the intensity modulated signal and an envelope detector (343) for converting the transported intensity modulated signal into an output radar signal.

3. The radar transceiver (101, 300) according to claim 2, wherein the laser (341) is a Vertical-Cavity Surface-Emitting Laser, VCSEL, or a distributed feedback laser, DFB.

4. The radar transceiver (101, 300) according to claim 2, wherein the envelope detector (343) is a photodetector.

5. The radar transceiver (101, 300) according to claim 2, wherein an antenna connected to a transmit port (TX1, TX2) is arranged to be driven directly by the output of the envelope detector (343).

6. The radar transceiver (101, 300) according to any previous claim, wherein the signals received on the one or more receive ports (RX1, RX2) are arranged to be downconverted (320) in frequency by a common carrier signal after traversing respective optical links (340), thereby enabling coherent receive port processing by the control unit (130).

7. The radar transceiver (101, 300) according to any previous claim, wherein the coherent receive port processing (330) by the control unit (130) comprises coherently combining received signals based on antenna pair distances to a target location.

8. A vehicle (100) comprising the radar transceiver (110, 300) according to any previous claim.
